# EUROPÄISCHE PATENTANMELDUNG

(11) **EP 4 696 120 A1**
(43) Veröffentlichungstag der Anmeldung: **18.02.2026**
(21) Anmeldenummer: 25195269.3
(22) Anmeldetag: 12.08.2025
(51) Int. Cl.: A01C 7/08

(54) **VERTEILER FÜR EINE PNEUMATISCHE VERTEILMASCHINE**

(30) Priorität: 14.08.2024 DE 102024123175
(71) Anmelder: Lemken GmbH & Co KG, 46519 Alpen (DE)
(72) Erfinder: Surborg, Carsten, 46519 Alpen (DE); Beier, Carsten, 33154 Salzkotten (DE)

(57) **Zusammenfassung**

Die vorliegende Erfindung betrifft einen Verteiler (1) für eine pneumatische Verteilmaschine, insbesondere Drillmaschine, zum Verteilen von Saatgut und/oder Dünger, mit einem Verteilergehäuse (7) mit einem Innenbereich (16) und einer Mehrzahl an Ausgängen (3), welche jeweils über eine Saatgutleitung (4) einem Saatgutauslauf (10) oder einem Säschar (11) zuordbar sind, einem innerhalb des Verteilergehäuses (7) angeordneten und zwischen mehreren Verteilstellungen schaltbaren Ringkörper (17), wobei der Ringkörper (17) eine Mehrzahl an Durchgangsöffnungen (15) aufweist, welche in mindestens einer ersten Verteilebene (20) und einer zweiten Verteilebene (21) angeordnet sind und durch welche der Innenbereich (16) mit mindestens einem Ausgang (3) verbindbar ist, wobei in einer ersten Verteilstellung des Ringkörpers (17) alle Ausgänge (3) über die erste Verteilebene (20) saatgutdurchlässig mit dem Innenbereich (16) verbunden sind, und in einer zweiten Verteilstellung des Ringkörpers (17) über die zweite Verteilebene (21) zumindest ein Ausgang (3) zumindest saatgutundurchlässig, insbesondere vollständig, verschließbar ist. Gemäß der Erfindung ist mindestens ein Verschlusselement (22) zur lösbaren Anordnung in einer Durchgangsöffnung (15), insbesondere der zweiten Verteilebene (21), des Ringkörpers (17) zum zumindest saatgutundurchlässigen Verschließens der Durchgangsöffnung (15) und insbesondere des zugeordneten Ausganges (3) vorgesehen.

## Beschreibung

Die vorliegende Erfindung betrifft einen Verteiler für eine pneumatische Verteilmaschine, insbesondere Drillmaschine, zum Verteilen von Saatgut und/oder Dünger.

Bekannt sind Verteiler für pneumatische Drillmaschinen, bei denen beim Anlegen von Fahrgassen der Verteiler in eine andere Stellung gebracht wird als bei einer Überfahrt, bei der keine Fahrgassen angelegt werden sollen. Dabei werden die Ausläufe des Verteilers zu den Säscharen, die nicht mit Saatgut versorgt werden sollen, abgesperrt. Dabei wird grundsätzlich keine gleichmäßige Querverteilung des Saatgutes auf die verbliebenen Ausläufe des Verteilers sichergestellt, weil durch das bekannte unsymmetrische Absperren von Ausgängen auch die Strömungsverhältnisse im Verteiler so verschlechtert werden, dass die verbliebenen Säschare nicht mehr gleichmäßig mit der gleichen Menge Saatgut versorgt werden können.

Eine gattungsgemäße Dosiervorrichtung ist in der DE 10 2004 038 258 A1 beschrieben. Hier erfolgt die Ausbringmenge bei abgesperrten Ausgängen zwar im gewünschten Rahmen, eine ungleiche Verteilung des Saatgutes auf die verbliebenen Säschare kann wegen der ungünstigen Strömungsverhältnisse jedoch nicht verbessert werden. Aus der DE 102 10 010 A1 ist ein Verteiler bekannt, bei welchem für das Anlegen von Fahrgassen ein Verteilsegment in Form eines Abweiskörpers in den Saatgutstrom geschoben wird, welcher die Ausgänge zu den Saatgutleitungen verdeckt, die nicht mit Saatgut versorgt werden sollen. Nachteilig ist hierbei, dass keine präzise Querverteilung erreicht werden kann und zudem keine verlustfreie Fahrgassenabschaltung. Zudem ist bei einer Änderung der abzuschaltenden Ausgänge ein Umrüsten erforderlich, wobei unter Umständen separate Einsätze für den Verteiler benötigt werden oder ein Umstecken von Saatgutleitungen an dem Verteiler erforderlich sein kann.

Es ist daher die Aufgabe der vorliegenden Erfindung einen Verteiler für eine pneumatische Verteilmaschine, insbesondere Drillmaschine, anzugeben, welcher zumindest einige oben genannte Nachteile behebt.

Die Aufgabe wird gelöst durch ein Arbeitsgerät gemäß den Merkmalen des Anspruches 1. Vorteilhafte Ausgestaltungen der Erfindung sind in den Unteransprüchen angegeben.

Ein Verteiler für eine pneumatische Verteilmaschine, insbesondere Drillmaschine, zum Verteilen von Saatgut und/oder Dünger, mit einem Verteilergehäuse mit einem Innenbereich und einer Mehrzahl an Ausgängen, welche jeweils über eine Saatgutleitung einem Saatgutauslauf oder einem Säschar zuordbar sind, einem innerhalb des Verteilergehäuses angeordneten und zwischen mehreren Verteilstellungen schaltbaren Ringkörper, wobei der Ringkörper eine Mehrzahl an Durchgangsöffnungen aufweist, welche in mindestens einer ersten Verteilebene und einer zweiten Verteilebene angeordnet sind und durch welche der Innenbereich mit mindestens einem Ausgang verbindbar ist, wobei in einer ersten Verteilstellung des Ringkörpers alle Ausgänge über die erste Verteilebene saatgutdurchlässig mit dem Innenbereich verbunden sind, und in einer zweiten Verteilstellung des Ringkörpers über die zweite Verteilebene zumindest ein Ausgang zumindest saatgutundurchlässig, insbesondere vollständig, verschließbar ist. Gemäß der Erfindung ist mindestens ein Verschlusselement zur lösbaren Anordnung in einer Durchgangsöffnung, insbesondere der zweiten Verteilebene, des Ringkörpers zum zumindest saatgutundurchlässigen Verschließens der Durchgangsöffnung und insbesondere des zugeordneten Ausganges vorgesehen.

Dem Verteiler kann Saatgut über eine Zuführleitung zugeführt werden. Die Zuführleitung kann an einem Anschluss, beispielsweise bodenseitig, des Verteilergehäuses angeschlossen sein. Das Saatgut kann über den Anschluss in ein Wirbelrohr geleitet werden, welches im Wesentlichen senkrecht angeordnet ist und an einem oberen Ende in einem Innenbereich des Verteilers mündet. Der Innenbereich kann über Durchgangsöffnungen, welche in einem Ringkörper angeordnet sind, mit den jeweiligen Ausgängen verbunden sein.

Die Ausgänge können entlang eines Umfangs des Verteilergehäuses, insbesondere in einer Ebene und/oder gleichmäßig beabstandet, angeordnet sein. Eine gleichmäßige Beabstandung kann eine gleichmäßigere Verteilung des Saatgutes auf die Ausgänge bewirken. Der Ringkörper kann eine im Wesentlichen runde, insbesondere um eine Rotationsachse rotationssymmetrische, oder ovale Form aufweisen. Die Durchgangsöffnungen des Ringkörpers können in Verteilebenen angeordnet sein, wobei innerhalb einer Verteilebene jedem Ausgang eine Durchgangsöffnung zugeordnet sein kann. Hierbei kann die Gesamtanzahl der Durchgangsöffnungen des Ringkörpers ein gerades Vielfaches der Anzahl an Ausgängen sein. Die Durchgangsöffnungen können entlang eines Umfangs des Ringkörpers gleichmäßig beabstandet angeordnet sein. Die Anzahl der Durchgangsöffnungen kann in unterschiedlichen Verteilebenen gleich groß sein.

Der Ringkörper kann innerhalb des Verteilergehäuses in unterschiedliche Verteilstellungen geschaltet oder verbracht werden. Hierbei kann der Ringkörper in eine axiale Richtung, beispielsweise entlang seiner Rotationsachse, verbracht werden. In einer Verteilstellung kann jeweils eine der Verteilebenen mit den Ausgängen übereinstimmend angeordnet sein. In einer ersten Verteilstellung können die Durchgangsöffnungen der ersten Verteilebene mit den Ausgängen im Wesentlichen fluchtend angeordnet sein. In einer zweiten Verteilstellung können die Durchgangsöffnungen der zweiten Verteilebene mit den Ausgängen im Wesentlichen fluchtend angeordnet sein, wobei jedoch mindestens ein Ausgang saatgutundurchlässig mit dem Innenbereich, beispielsweise zur Schaltung einer Fahrgasse, verbunden sein kann. Denkbar ist auch, dass eine oder mehrere Durchgangsöffnungen der ersten Verteilebene im regulären, fahrgassenfreien, Betrieb verschlossen sein können, beispielsweise falls eine geringere Arbeitsbreite genutzt wird oder falls nur jedes zweite Säschar mit Dünger versorgt werden soll.

Ein Verschlusselement kann radial innenseitig vor und/oder in einer Durchgangsöffnung lösbar angeordnet sein. Das Verschlusselement kann zumindest saatgutundurchlässig ausgebildet sein, wobei ein Luftstrom das Verschlusselement passieren kann. Durch das Verschlusselement kann eine Durchgangsöffnung und damit ein diesem zugeordneter Ausgang zumindest saatgutundurchlässig, insbesondere vollständig, verschließbar sein. Bei einer saatgutundurchlässig verschlossenen Durchgangsöffnung bzw. Ausgang kann eine geringe Menge Luft durch die Durchgangsöffnung in den Ausgang gelangen, jedoch kein Saatgut, wodurch beispielsweise eine Fahrgassenschaltung ermöglicht werden kann. Der Ringkörper kann neben einer ersten Verteilebene, insbesondere für einen fahrgassenfreien Betrieb, mindestens eine zweite Verteilebene mit teilweise verschlossenen Durchgangsöffnungen, insbesondere zur Erzeugung von Fahrgassen, aufweisen. Zudem kann der Ringkörper weitere schaltbare Verteilebenen aufweisen. Dies hat den Vorteil, dass unterschiedliche Fahrgassenschaltungen, beispielsweise unterschiedliche Fahrgassenbreiten, oder Schaltungen zur Saatgut- bzw. Düngerausbringung voreingestellt werden können.

Im Betrieb können diese dann ohne großen Aufwand durch Schalten einer entsprechenden Verteilstellung aktiviert werden.

Der erfindungsgemäße Verteiler bietet den Vorteil, dass durch die lösbar einsetzbaren Verschlusselemente unterschiedliche Fahrgassenschaltung werkzeuglos und mit geringem Zeitaufwand vorgenommen werden können. Zudem kann der Ringkörper mit geringem Aufwand an unterschiedliche Arbeitsgeräte, insbesondere pneumatische Drillmaschinen, angepasst werden, wodurch Kosten gespart werden können.

In einer vorteilhaften Ausgestaltung ist das Verschlusselement derart ausgebildet, dass es formschlüssig und/oder kraftschlüssig in dem Ringkörper lösbar anordbar ist. Das Verschlusselement kann formschlüssig und/oder kraftschlüssig in den Ringkörper eingesteckt, geklemmt und/oder eingeklipst sein, wodurch eine werkzeuglose und einfache Montage bzw. Demontage des Verschlusselementes ermöglicht werden kann.

In einer besonders bevorzugten Ausgestaltung weist der Ringkörper mehrere im Wesentlichen parallel zueinander angeordnete und durch, insbesondere stabförmige, Lagerelemente verbundene Ringelemente auf, wobei ein Verschlusselement zwischen zwei benachbarten Lagerelementen anordbar ist. Der Ringkörper kann mehrere Ringelemente aufweisen, welche im Wesentlichen der Grundform des Ringkörpers, insbesondere um die Rotationsachse, entsprechen können. Die Ringelemente können im Wesentlichen parallel und beabstandet zueinander angeordnet sein. Zwischen den Ringelementen können, insbesondere stabförmige, Lagerelemente angeordnet sein, wobei zwischen benachbarten Lagerelementen einer Verteilebene ein Verschlusselement an bzw. zwischen diesen angeordnet werden kann. Die Lagerelemente zwischen benachbarten Ringelementen können dabei den Abstand zwischen den Ringelementen vorgeben. Die Lagerelemente können entlang eines Umfangs der Ringkörpers und/oder der Ringelemente, insbesondere in Wesentlichem gleichmäßigen Abständen, angeordnet sein. Die Lagerelemente können dabei radial innenseitig einer radial außenseitigen Kante des Ringkörpers und/oder der Ringelemente angeordnet sein. Die Ringelemente und/oder Lagerelemente können aus Kunststoff und/oder Metall gefertigt sein. Eine Durchgangsöffnung kann, insbesondere seitlich, durch zwei benachbarte Lagerelemente und, insbesondere in der Höhe, durch zwei benachbarte Ringelemente, zwischen denen die Lagerelemente angeordnet sind, ausgebildet werden. Durch die Lagerelemente und die Ringelemente könne bei geringem Bauraumbedarf eine hohe Anzahl an Durchgangsöffnungen in unterschiedlichen Verteilebenen ausgebildet werden.

Vorzugsweise ist ein Verschlusselement zumindest teilweise elastisch ausgebildet, und weist insbesondere lagerelementseitig eine Profilierung, insbesondere in Form einer Nut, zur kraftschlüssigen und/oder formschlüssigen Lagerung an einem Lagerelement auf. Das Verschlusselement kann zumindest elastische Bereiche aufweisen, welche eine elastische Verformung zur Montage des Verschlusselementes, insbesondere zwischen zwei Lagerelemente, ermöglichen kann. Die Profilierung kann zur kraftschlüssigen und/oder formschlüssigen Verbindung mit den benachbarten Lagerelementen und/oder den benachbarten Ringelementen dienen. Eine Profilierung in Form einer Nut kann jeweils lagerelementseitig an dem Verschlusselement ausgebildet sein. Dies hat den Vorteil, dass das elastische Verschlusselement zwischen zwei benachbarte, insbesondere stabförmige Lagerelemente, geklemmt werden kann.

Besonders bevorzugt sind der Ringkörper und das mindestens eine Verschlusselement derart ausgebildet, dass in einem montierten Zustand ein Verschlusselement radial außenseitig im Wesentlichen bündig mit dem Ringkörper, insbesondere dessen Ringelementen, abschließt. Eine Durchgangsöffnung kann radial außenseitig an einer Ober- und Unterseite jeweils durch ein Ringelement und seitlich, insbesondere lagerelementseitig, durch das Verschlusselement abgedichtet sein. Hierdurch kann radial außenseitig zu allen Seiten einer Durchgangsöffnung eine zumindest saatgutundurchlässige Abdichtung eines Ausgangs ermöglicht werden.

In einer weiter bevorzugten Ausgestaltung entspricht ein Abstand zweier benachbarter Lagerelemente und/oder eine Breite des Verschlusselementes, insbesondere in montiertem Zustand, mindestens einem Durchmesser eines Ausganges. Hierdurch kann bei einem saatgutdurchlässig mit dem Innenbereich verbundenen Ausgang eine Drosselwirkung vermieden werden, so dass das Saatgut ungehindert zu dem Ausgang durch den Ringkörper strömen kann.

Vorzugsweise weist das Verschlusselement eine nach radial innen des Ringkörpers gerichtete Auskragung auf. Die Auskragung kann sich in einer Höhe zumindest teilweise zwischen zwei benachbarten Ringelementen erstrecken. Die Auskragung kann dabei als Wölbung, beispielsweise zur verbesserten Abweisung einer Luftströmung und/oder als Griffelement zum Handhaben des Verschlusselementes ausgebildet sein.

In einer bevorzugten Ausgestaltung sind zwei benachbarte Verschlusselemente in der, insbesondere zweiten, Verteilebene derart angeordnet, dass zumindest eine Durchgangsöffnung zwischen den benachbarten Verschlusselementen unverschlossen ist. Hierdurch kann eine verbesserte Luftströmung zu den unverschlossenen Durchgangsöffnungen bzw. Ausgängen hin erreicht werden. Dies hat den Vorteil, dass eine Verteilung des Saatgutes auf die unverschlossenen Durchgangsöffnungen bzw. Ausgänge weniger beeinträchtigt wird.

In einer besonders bevorzugten Ausgestaltung ist eine Verstellvorrichtung zum Verlagern des Ringkörpers vorgesehen. Die Verstellvorrichtung kann zumindest teilweise außerhalb des Verteilergehäuses, insbesondere unterhalb, angeordnet sein. Durch die Verstellvorrichtung kann eine Verlagerung des Ringkörpers in eine jeweilige Verteilstellung, insbesondere in axialer Richtung, ermöglicht werden.

Weiterhin betrifft die Erfindung ein landwirtschaftliches Arbeitsgerät, insbesondere eine pneumatische Verteilmaschine, insbesondere eine pneumatische Drillmaschine, mit mindestens einem wie vorstehend ausgebildeten Verteiler. Das Arbeitsgerät kann zudem einen Vorratstank für Saatgut und/oder Dünger mit einer Dosiereinrichtung aufweisen, von dem über die Zuführleitung Saatgut und/oder Dünger zu dem Verteiler gefördert werden kann. An den Ausgängen des Verteilers können jeweils Saatgutleitungen angeschlossen sein, über die, falls diese unverschlossen sind, Saatgut und/oder Dünger zu den Säscharen gefördert werden kann.

Weitere Einzelheiten der Erfindung sind den Figuren und der Figurenbeschreibung zu entnehmen, die eine bevorzugte Ausführung der Erfindung zeigen.

Es zeigen:
- Fig 1:: eine schematische Ansicht eines landwirtschaftlichen Arbeitsgerätes mit einem Verteiler;
- Fig. 2:: eine perspektivische Ansicht des Verteilers mit Ringelement;
- Fig. 3:: eine Schnittansicht einer Sektion des Ringelementes mit Verschlusselementen;
- Fig. 4:: eine perspektivische Ansicht eines Verschlusselementes;
- Fig. 5:: eine Schnittansicht des Verteilers mit einer geschalteten zweiten Verteilebene mit Verschlusselement; und
- Fig. 6:: eine Schnittansicht des Verteilers mit einer geschalteten ersten Verteilebene.

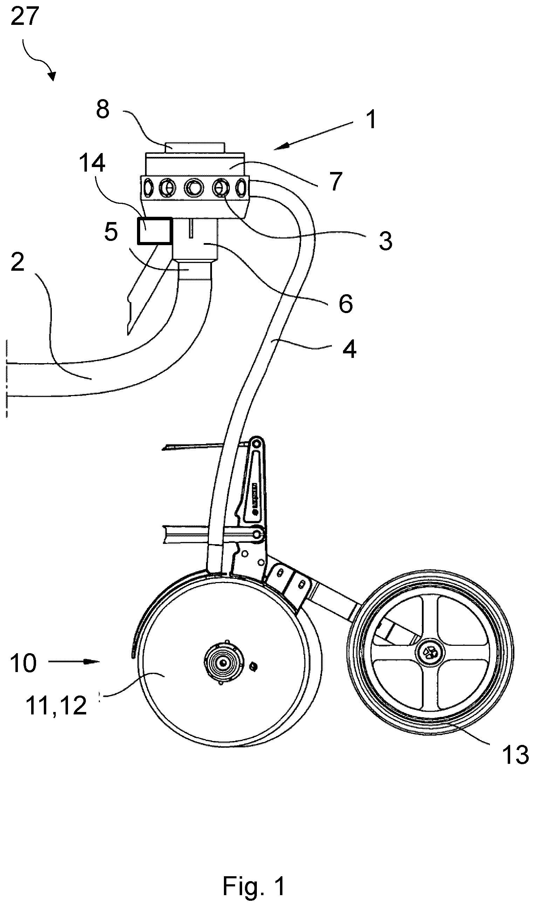

Figur 1 zeigt eine schematische Ansicht eines landwirtschaftlichen Arbeitsgerätes 27 in Form einer pneumatischen Verteilmaschine bzw. Drillmaschine. Das zu verteilende Saatgut wird über eine Zuführleitung 2 von einem Vorratstank mit einer Dosiereinrichtung (nicht dargestellt) dem Verteiler 1 zugeführt. Die Zuführleitung 2 ist an einem bodenseitig des Verteilergehäuses 7 angeordneten Anschluss 5 mit einem Wirbelrohr 6 des Verteilers 1 verbunden. Über die Ausgänge 3 des Verteilers 1, welche in gleichmäßigen Abständen entlang des Umfangs des Verteilergehäuses 7 angeordnet sind, gelangt das Saatgut über Saatgutleitungen 4 jeweils zu einem Saatgutauslauf 10 bzw. Säschar 11. Das Säschar 11 ist hier als Doppelscheibenschar 12 ausgebildet, das in der Tiefe über die Tiefenführungsrolle 13 geführt wird. An dem Verteilergehäuse 7 ist eine Verstellvorrichtung 14 angeordnet, über die eine Schaltung unterschiedlicher Verteilstellungen des Verteilers 1 vorgenommen werden kann. Hierbei kann eine erste Verteilstellung das Ausbringen von Saatgut über alle Ausgänge sein, während in einer zweiten Verteilstellung Ausgänge teilweise verschlossen sein können, beispielsweise zur Erzeugung von Fahrgassen.

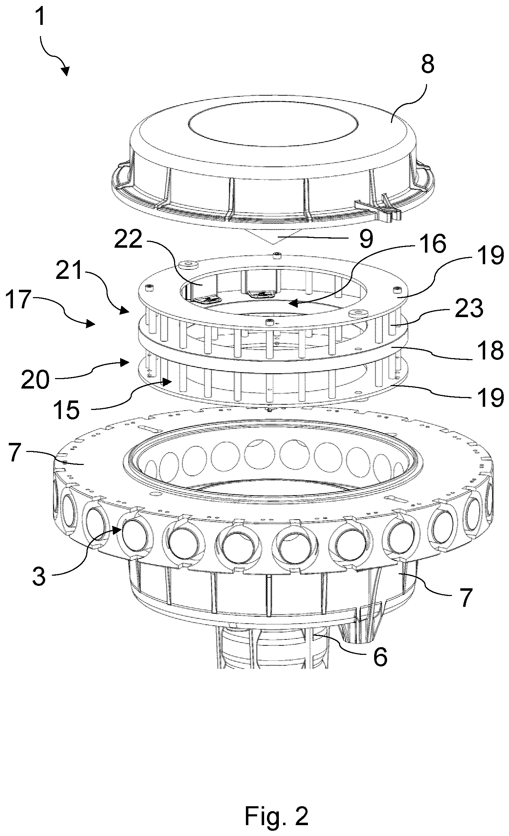

Fig. 2 zeigt eine perspektivische Ansicht des Verteilers 1 in einem demontierten Zustand. An einer Unterseite des Verteilergehäuses 7 ist das Wirbelrohr 6 angeordnet, über das Saatgut in den Verteiler 1 gefördert werden kann. Das Verteilergehäuse 7 weist entlang seines Umfangs Ausgänge 3 auf, welche in gleichmäßigen Abständen und in einer Ebene angeordnet sind. Im Inneren des Verteilergehäuses 7 ist in einem montierten Zustand des Verteilers 1 ein Ringkörper 17 angeordnet, welcher innerhalb des Verteilergehäuses 7 zwischen verschiedenen Verteilstellungen beweglich gelagert ist. Der Ringkörper 17 weist eine erste Verteilebene 20 und eine zweite Verteilebene 21 auf, welche im Wesentlichen parallel zueinander angeordnet sind. Die erste und zweite Verteilebene 20, 21 weisen eine gleiche Anzahl an Durchgangsöffnungen 15 auf, welche in der entsprechenden Verteilstellung jeweils einem Ausgang 3 zugeordnet sind. In der ersten Verteilstellung ist die erste Verteilebene 20 den Ausgängen 3 zugeordnet, wobei durch alle Durchgangsöffnungen 15 des Ringkörpers 17 Saatgut von einem Innenbereich 16 zu den Ausgängen 3 strömen kann. In der zweiten Verteilstellung ist die zweite Verteilebene 21 den Ausgängen 3 zugeordnet, wobei zumindest zwei Durchgangsöffnungen 15 der zweiten Verteilebene 21 jeweils durch ein Verschlusselement 22 zumindest saatgutundurchlässig verschlossen sind. Hierdurch wird zu den zugeordneten Ausgängen 3 kein Saatgut gefördert, so dass beispielsweise eine saatgutfreie Fahrgasse im Feld erzeugt werden kann.

Gemäß der Erfindung ist mindestens ein Verschlusselement 22 lösbar in einer Durchgangsöffnung 15, insbesondere der zweiten Verteilebene 21, des Ringkörpers 17 angeordnet. Hierdurch kann die Durchgangsöffnung 15 und insbesondere der zugeordnete Ausgang 3 zumindest saatgutundurchlässig verschlossen werden. Der Ringkörper 17 weist drei ringförmige Ringelement 18, 19 auf, welche parallel und beabstandet zueinander angeordnet sind. Die Ringelemente 18, 19 werden über stiftförmige Lagerelemente 23 miteinander, insbesondere lösbar, beabstandet zueinander verbunden. Die Lagerelemente 23 sind radial innenseitig entlang des Umfangs des Ringkörpers 17 in gleichmäßigen Abständen angeordnet. Radial innenseitig umschließt der Ringkörper 17 teilweise den Innenbereich 16 des Verteilers 1. Das mittlere Ringelement 18 ist zur Aufnahme der Lagerelemente 23 dicker ausgeführt als die äußeren Ringelemente 18.

In der zweiten, oberen, Verteilebene 21 sind zwei Verschlusselemente 22 jeweils zwischen zwei benachbarten Lagerelementen 23 lösbar angeordnet, wobei die jeweilige Durchgangsöffnung 15 und der zugeordnete Ausgang 3 zumindest saatgutundurchlässig verschlossen sein kann. Zwischen den Verschlusselementen 22 ist eine unverschlossene Durchgangsöffnung 15 angeordnet, wodurch eine Luftströmung und damit Saatgutverteilung innerhalb des Ringkörpers 17 verbessert werden kann. In einem montierten Zustand wird das Verteilergehäuse 7 oberseitig durch einen Deckel 8 verschlossen. Der Deckel 8 weist einen Kegel 9 auf, welcher in den Innenbereich 16 hineinragt, um eine verbesserte Luftströmung innerhalb des Verteilers 1 zu bewirken.

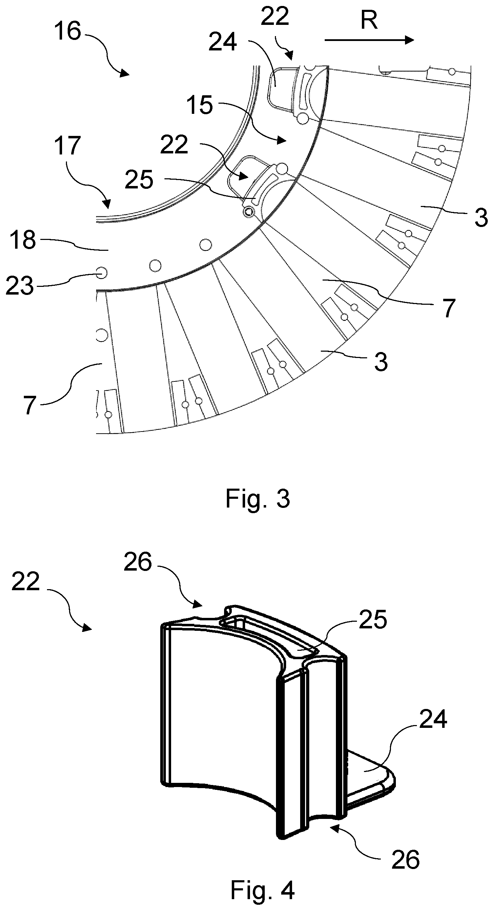

Eine Schnittansicht eines Segments des Verteilers 1 ist in Fig. 3 dargestellt. Der Ringkörper 17 des Verteiler 1 ist in der zweiten Verteilstellung dargestellt, in der die zweite Verteilebene 21 den Ausgängen 3 zugeordnet ist. Die Luft mit Saatgut kann aus dem Innenbereich 16 durch den Ringkörper 17 und dessen freie Durchgangsöffnungen 15 zu den Ausgängen 3 strömen. Die dargestellte zweite Verteilebene 21 weist zwei zumindest saatgutundurchlässig verschlossene Durchgangsöffnungen 15 bzw. Ausgänge 3 auf. Die entsprechenden Durchgangsöffnungen 15 sind jeweils durch ein Verschlusselement 22 verschlossen. Die Verschlusselemente 22 sind dabei kraftschlüssig und/oder formschlüssig zwischen benachbarten Lagerelementen 23 lösbar angeordnet.

Die Verschlusselemente 22 weisen jeweils eine Auskragung (Fig. 4) in Form einer sich entlang eines Ringelementes (18) erstreckenden Lasche auf. Diese kann eine Montage und Demontage des Verschlusselementes 22 erleichtern. Zudem kann die Auskragung 24 eine Luftströmung an dem Verschlusselement 22 positiv beeinflussen und beispielsweise zu einer geöffneten Durchgangsöffnung 15 lenken. Das Verschlusselement 22 weist seitlich, lagerelementseitig, jeweils eine nutförmige Profilierung auf, welche eine verbesserte kraftschlüssige und/oder formschlüssige Lagerung an dem Lagerelement 23 ermöglicht. Um beispielsweise eine Verformung des, insbesondere elastischen, Verschlusselementes 22 bei der Montage zu ermöglichen, weist das Verschlusselement 22 einen Hohlraum 25 auf.

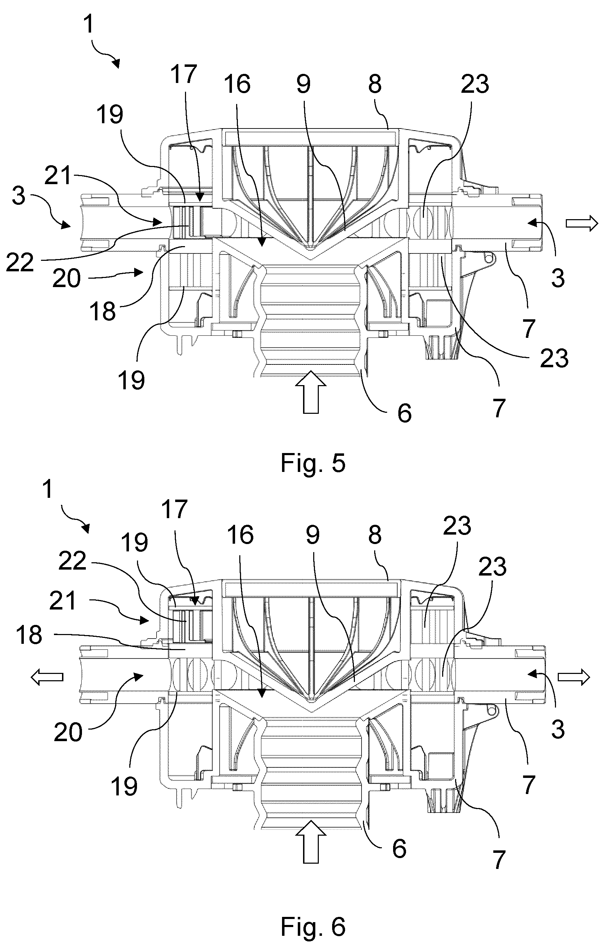

In Fig. 5 ist der Verteiler 1 in einer Schnittansicht mit einer geschalteten zweiten Verteilebene 21 zur Erzeugung einer Fahrgasse dargestellt. Die in den Verteiler 1 eintretende, saatgutfördernde Luft gelangt über das Wellrohr 6 in den Innenbereich 16 des Verteilergehäuses 7. Durch den Kegel 9 des Deckels 8 werden Luftstrom und Saatgut nach radial außen zu dem Ringkörper 17 und den Ausgängen 3 abgelenkt. Durch den Ringkörper 17 und die in der zweiten Verteilebene 21 angeordneten und geöffneten Durchgangsöffnungen 15 strömt die Luft mit dem Saatgut zu den entsprechenden Ausgängen 3. Auf der linken Seite ist ein Ausgang 3 dargestellt, dessen zugeordnete Durchgangsöffnung 15 durch ein Verschlusselement 22 zumindest saatgutundurchlässig verschlossen ist, so dass hier zumindest kein Saatgut in den Ausgang 3 gelangen kann. Das Verschlusselement 22 kann die Durchgangsöffnung 15 auch vollständig verschließen. Die erste Verteilebene 20 des Ringkörpers 17 ist unterhalb der zweiten Verteilebene 21 in dem Verteilergehäuse 7 angeordnet.

In Fig. 6 ist der Ringkörper 17 in der ersten Verteilstellung dargestellt. Hierbei ist die erste Verteilebene 20 den Ausgängen 3 zugeordnet. In der dargestellten ersten Verteilebene 20 sind alle Durchgangsöffnungen 15 unverschlossen, so dass in den Verteiler 1 eintretende Luft und Saatgut durch den Ringkörper 17 zu allen Ausgängen 3 gelangen.

**Bezugszeichen**

| | | | |
|---|---|---|---|
| 1 | Verteiler | R | Radiale Richtung |
| 2 | Zuführleitung | | |
| 3 | Ausgang | | |
| 4 | Saatgutleitung | | |
| 5 | Anschluss für Zuführleitung | | |
| 6 | Wirbelrohr | | |
| 7 | Verteilergehäuse | | |
| 8 | Deckel mit Kegel | | |
| 9 | Kegel | | |
| 10 | Saatgutauslauf | | |
| 11 | Säschar | | |
| 12 | Doppelscheibenschar | | |
| 13 | Tiefenführungsrolle | | |
| 14 | Verstellvorrichtung | | |
| 15 | Durchgangsöffnung | | |
| 16 | Innenbereich | | |
| 17 | Ringkörper | | |
| 18 | Erstes Ringelement | | |
| 19 | Zweites Ringelement | | |
| 20 | Erste Verteilebene | | |
| 21 | Zweite Verteilebene | | |
| 22 | Verschlusselement | | |
| 23 | Lagerelement | | |
| 24 | Auskragung | | |
| 25 | Hohlraum | | |
| 26 | Profilierung | | |
| 27 | Landwirtschaftliches Arbeitsgerät | | |

## Patentansprüche

1. Verteiler für eine pneumatische Verteilmaschine, insbesondere Drillmaschine, zum Verteilen von Saatgut und/oder Dünger, mit einem Verteilergehäuse (7) mit einem Innenbereich (16) und einer Mehrzahl an Ausgängen (3), welche jeweils über eine Saatgutleitung (4) einem Saatgutauslauf (10) oder einem Säschar (11) zuordbar sind, einem innerhalb des Verteilergehäuses (7) angeordneten und zwischen mehreren Verteilstellungen schaltbaren Ringkörper (17), wobei der Ringkörper (17) eine Mehrzahl an Durchgangsöffnungen (15) aufweist, welche in mindestens einer ersten Verteilebene (20) und einer zweiten Verteilebene (21) angeordnet sind und durch welche der Innenbereich (16) mit mindestens einem Ausgang (3) verbindbar ist, wobei in einer ersten Verteilstellung des Ringkörpers (17) alle Ausgänge (3) über die erste Verteilebene (20) saatgutdurchlässig mit dem Innenbereich (16) verbunden sind, und in einer zweiten Verteilstellung des Ringkörpers (17) über die zweite Verteilebene (21) zumindest ein Ausgang (3) zumindest saatgutundurchlässig, insbesondere vollständig, verschließbar ist, **dadurch gekennzeichnet, dass**
mindestens ein Verschlusselement (22) zur lösbaren Anordnung in einer Durchgangsöffnung (15), insbesondere der zweiten Verteilebene (21), des Ringkörpers (17) zum zumindest saatgutundurchlässigen Verschließens der Durchgangsöffnung (15) und insbesondere des zugeordneten Ausganges (3) vorgesehen ist.

2. Verteiler nach Anspruch 1, **dadurch gekennzeichnet, dass** das Verschlusselement (22) derart ausgebildet ist, dass es formschlüssig und/oder kraftschlüssig in dem Ringkörper (17) lösbar anordbar ist.

3. Verteiler nach Anspruch 1 oder 2, **dadurch gekennzeichnet, dass** der Ringkörper (17) mehrere im Wesentlichen parallel zueinander angeordnete und durch, insbesondere stabförmige, Lagerelemente (23) verbundene Ringelemente (18, 19) aufweist, wobei ein Verschlusselement (22) zwischen zwei benachbarten Lagerelementen (23) anordbar ist.

4. Verteiler nach einem der vorherigen Ansprüche, **dadurch gekennzeichnet, dass** ein Verschlusselement (22) zumindest teilweise elastisch ausgebildet ist, und insbesondere lagerelementseitig eine Profilierung (26), insbesondere in Form einer Nut, zur kraftschlüssigen und/oder formschlüssigen Lagerung an einem Lagerelement (23) aufweist.

5. Verteiler nach einem der vorherigen Ansprüche, **dadurch gekennzeichnet, dass** der Ringkörper (17) und das mindestens eine Verschlusselement (22) derart ausgebildet sind, dass in einem montierten Zustand ein Verschlusselement (22) radial außenseitig im Wesentlichen bündig mit dem Ringkörper (17), insbesondere dessen Ringelementen (18, 19), abschliesst.

6. Verteiler nach einem der vorherigen Ansprüche, **dadurch gekennzeichnet, dass** ein Abstand zweier benachbarter Lagerelemente (23) und/oder eine Breite des Verschlusselementes (22), insbesondere in montiertem Zustand, mindestens einem Durchmesser eines Ausgang (3) entspricht.

7. Verteiler nach einem der vorherigen Ansprüche, **dadurch gekennzeichnet, dass** das Verschlusselement (22) eine nach radial innen des Ringkörpers (17) gerichtete Auskragung (24) aufweist.

8. Verteiler nach einem der vorherigen Ansprüche, **dadurch gekennzeichnet, dass** zwei benachbarte Verschlusselemente (22) in der, insbesondere zweiten, Verteilebene (21) derart angeordnet sind, dass zumindest eine Durchgangsöffnung (15) zwischen den benachbarten Verschlusselementen (22) unverschlossen ist.

9. Verteiler nach einem der vorherigen Ansprüche, **dadurch gekennzeichnet, dass** eine Verstellvorrichtung (14) zum Verlagern des Ringkörpers (17) vorgesehen ist.

10. Landwirtschaftliches Arbeitsgerät, insbesondere pneumatische Verteilmaschine, insbesondere pneumatische Drillmaschine, mit mindestens einem Verteiler nach einem der Ansprüche 1 bis 9.
